# FASCICULE DE BREVET EUROPEEN

(11) **EP 3 394 711 B1**
(45) Date de publication et mention de la délivrance du brevet: **01.01.2020**
(21) Numéro de dépôt: 16816650.2
(22) Date de dépôt: 15.12.2016
(51) Int. Cl.: G06F 3/01, H04B 10/114, H04Q 11/00

(54) **SYSTÈME DE LIAISON OPTIQUE SANS FIL POUR LA TRANSMISSION DE DONNÉES À TRÈS HAUT DÉBIT DE MANIÈRE ASSERVIE EN ITINÉRANCE**
DRAHTLOSES OPTISCHES VERBINDUNGSSYSTEM FÜR DATENÜBERTRAGUNG BEI SEHR HOHER GESCHWINDIGKEIT AUF GESTEUERTE WEISE WÄHREND EINER BEWEGUNG
WIRELESS OPTICAL LINK SYSTEM FOR TRANSMITTING DATA AT VERY HIGH SPEED IN A CONTROLLED MANNER WHILE MOVING

(30) Priorité: 22.12.2015 FR 1563044
(43) Date de publication de la demande: 31.10.2018
(73) Titulaire: Institut Mines Telecom, 29238 Brest Cedex 3 (FR)
(72) Inventeur: DE BOUGRENET DE LA TOCNAYE, Jean-Louis, 29820 Guilers (FR); FRACASSO, Bruno, 29810 Plouarzel (FR); AL HAJJAR, Hani, 60200 Compiegne (FR); CURT, Jean-Baptiste, 29890 Plouenour-Trez (FR)
(74) Mandataire: Gevers & Orès
(86) Numéro de dépôt international: PCT/EP2016/081258
(87) Numéro de publication internationale: WO 2017/108583

(56) Documents cités:
- EP-A2- 1 511 194
- US-A- 6 101 038
- US-B1- 6 630 915
- US-B1- 8 488 969

## Description

### 1. Domaine de l'invention

Le domaine de l'invention est celui de l'immersion d'un ou de plusieurs utilisateurs dans une réalité virtuelle ou augmentée.

Plus précisément, l'invention concerne une technique de transmission d'un signal multimédia (vidéo et audio notamment) vers au moins un équipement multimédia portatif, tel qu'un casque immersif de type HMD (pour "*head mounted display*" en anglais) porté par un utilisateur.

L'invention peut être mise en œuvre par exemple dans le cadre d'attractions proposées dans des parcs à thèmes ou dans le cadre d'un usage domestique.

### 2. Art antérieur

Dans le domaine de l'invention, différents dispositifs pour créer un environnement virtuel ont été proposés.

On connaît notamment les dispositifs d'immersion désignés par le terme de "CAVE", formant une sorte de pièce à l'intérieur de laquelle au moins un utilisateur peut évoluer en étant plongé dans une scène recouvrant les parois de la pièce, voire le sol et le plafond. L'utilisateur peut interagir sur les images diffusées, le système mettant en œuvre pour cela un ensemble de capteurs portés par l'utilisateur et/ou un système de caméra permettant de détecter les mouvements de l'utilisateur.

Les technologies de CAVE sont désormais matures et sont utilisées par un large spectre d'industries (automobile, aéronautique,...).

On connait par ailleurs les casques d'immersion qui permettent à l'utilisateur de s'immerger dans une scène virtuelle d'un jeu vidéo par exemple, en déplaçant sa tête et son regard, en effectuant certains gestes et en se déplaçant éventuellement dans un rayon limité.

Les casques d'immersion en trois dimensions (3D) actuels utilisent des liaisons filaires à haut débit, au standard HDMI (marque déposée) par exemple, pour relier le calculateur de flux vidéo au casque.

Une telle liaison filaire n'offre qu'une mobilité réduite à l'utilisateur et constitue par conséquent un frein à l'immersion pour ce dernier.

La plupart des technologies de transmission sans-fil disponibles sont basées sur la propagation d'ondes radiofréquences (notées "RF" pour "Radio Frequency" en anglais). Toutefois, aucune d'entre-elles n'est actuellement susceptible de transmettre les débits requis par l'immersion tridimensionnelle (3D) en très haute-définition au format brut (appelé "*raw*" en anglais), soit des débits supérieurs à 5 Gbit/s.

Outre ce problème de capacité se pose également le problème de l'intégration d'une interface radiofréquence sur le casque, c'est-à-dire au voisinage de la tête de l'utilisateur, qui est susceptible d'interagir avec les tissus biologiques de la sphère ORL (pour "oto-rhino-laryngée") humaine et de perturber les circuits électroniques d'adressage des afficheurs intégrés au casque immersif (les puissances utilisées dans ce cas sont bien supérieurs aux normes standard, telles que le Wi-Fi (marque déposée)).

Dans le contexte de transmission à très haut débit évoqué ci-dessus, les technologies de transmission optique en espace-libre ("WOC" en anglais, pour "Wireless Optical Communications") constituent une alternative aux solutions radiofréquences. Ces dernières années ont connu l'émergence des techniques et applications des WOC à des échelles spatiales très variées, telles que les liaisons atmosphériques ou satellitaires dites FSO (pour "Free-Space Optics" en anglais), les liaisons optiques intra-bâtiment pour les réseaux locaux à très haut débit, les interconnexions optiques au sein d'une même puce (liens dits "intra-chip") et entre puces (liens dits "chip-to-chip"), les transmissions optiques sous-marines, ou les communications optiques dans les spectres visible et ultraviolet.

L'application des WOC pour les communications en milieu confiné (« indoor » en anglais), et notamment en environnement sensible aux interférences électromagnétiques, est un enjeu majeur. La norme LiFi (marque déposée), pour "Light Fidelity" en anglais, est actuellement introduite dans les véhicules et les espaces publics en utilisant des émetteurs à LED (pour "Light-Emitting Diode" en anglais, et "diode électroluminescente" en français) en lumière visible assurant également l'éclairage. Les débits accessibles dans ce cas sont actuellement limités au Gbit/s.

Pour satisfaire les contraintes de l'application (à savoir les casques d'immersion en 3D en très haute-définition), permettre des débits supérieurs à ceux disponibles actuellement et l'immersion de plusieurs utilisateurs, le recours à des sources temporellement cohérentes (lasers) et des détecteurs rapides issus des technologies de communication à fibre optique semble incontournable.

Le brevet US 6 630 915 propose une technique de transfert de données audio et vidéo d'un calculateur de réalité virtuelle vers un ou plusieurs utilisateurs situés dans un espace délimité et équipés d'un casque de réalité virtuelle. Le transfert des données vers un utilisateur mobile est mis en œuvre par le biais d'une liaison optique sans fil à haut débit comprenant une source optique (un laser de préférence) qui est pointée par asservissement vers un récepteur optique monté sur le casque de réalité virtuelle de l'utilisateur, de façon à ce que les données audio et vidéo ne soient pas reçues par un autre utilisateur.

Dans un mode de réalisation particulier, la source optique émet un signal laser multiplexé en fréquence ou en temps de façon à transférer des données audio et vidéo vers plusieurs utilisateurs, sans suivi (ou "*tracking*" en anglais) des mouvements de ces derniers.

Selon l'approche décrite dans ce document de brevet, le débit du flux de données audio et vidéo ne dépasse pas 1 Gbit/s.

Cette technique ne permet donc pas de transmettre les débits requis par l'immersion 3D en très haute-définition pour de multiples utilisateurs.

En outre, du fait que la source optique pointe le laser directement vers le récepteur optique du casque de l'utilisateur et doive adapter la direction du laser en fonction de la position de l'utilisateur mobile, il existe un risque de masquage ou de coupure de la transmission optique de données du calculateur vers le casque de l'utilisateur. Un risque de coupure ou de perte de débit existe également lorsque l'utilisateur se trouve à une distance trop importante de la source optique.

Il existe donc un besoin pour une nouvelle technique permettant de transmettre des données multimédia à très haut débit vers un ou plusieurs utilisateurs mobiles ne présentant pas l'ensemble de ces inconvénients de l'art antérieur.

### 3. Exposé de l'invention

L'invention propose une solution nouvelle et non évidente qui ne présente pas l'ensemble des inconvénients de l'art antérieur, sous la forme d'un système d'immersion d'au moins un premier utilisateur dans une réalité virtuelle ou augmentée comprenant un espace d'immersion dans lequel peut se déplacer ledit au moins un premier utilisateur.

Selon l'invention, le système comprend :
- un dispositif de réception optique porté par ledit premier utilisateur,
- des moyens de traitement comprenant :
   - des moyens de génération d'un premier flux multimédia immersif destiné au dit premier utilisateur en fonction des mouvements de ce dernier,
   - des moyens de transmission optique d'un signal optique multiplexé vers au moins une borne d'accès optique comprenant a) des moyens d'association dudit premier flux multimédia immersif à une première longueur d'onde et b) des moyens de multiplexage configurés pour multiplexer plusieurs flux multimédia immersifs associés à des longueurs d'ondes distinctes, dont ledit premier flux multimédia immersif associé à la première longueur d'onde, de façon à former ledit signal optique multiplexé,
ladite borne d'accès optique étant disposée dans ledit espace d'immersion de façon à former une cellule optique (CEO) s'étendant dans ledit espace d'immersion,
ledit dispositif de réception optique comprenant a) des moyens de réception du signal optique multiplexé depuis ladite borne d'accès optique via une liaison optique sans fil lorsque ledit utilisateur se situe dans la cellule optique (CEO), et b) des moyens de filtrage configurés pour extraire le premier flux multimédia immersif destiné au premier utilisateur à partir du signal optique multiplexé.

L'invention permet de fournir un système de transmission optique sans-fil à très haut débit entre une source de données (vidéos multiples et audio notamment) vers un ou plusieurs utilisateurs munis, par exemple, d'un casque de réalité virtuelle ou augmentée et mobiles dans un espace d'immersion, de type CAVE par exemple.

Par « très haut débit », on entend des taux de transfert supérieurs à 10 Gbit/s.

Ce système ne présente pas les limitations en débit des systèmes RF, et garantie l'intégrité de la liaison optique dans les conditions normales de position et d'orientation de la tête de l'utilisateur.

En effet, le système de l'invention propose un schéma de connexion optique en mode « indirect », dans lequel la liaison entre l'émetteur optique et le ou les récepteurs optiques portés par le ou les utilisateurs est relayée par un ou plusieurs éléments appelés points ou bornes d'accès optiques.

Chacune de ces bornes est située en surplomb du ou des utilisateurs par rapport aux parois de l'espace d'immersion, de façon à former une cellule optique s'étendant dans l'espace d'immersion et dans laquelle le récepteur optique de l'utilisateur est configuré pour recevoir les données qui lui sont destinées.

La liaison optique sans fil entre une borne d'accès optique et un récepteur optique d'un utilisateur est à la fois plongeante et de longueur minimale.

Cette approche permet ainsi d'amener les données multimédias au plus près des utilisateurs et réduit, par conséquent, les risques de masquage ou de coupure de la transmission optique des données.

Le système de l'invention est adapté aux cas de multiples utilisateurs (deux ou plus), et permet l'adressage simultané de plusieurs récepteurs en situation de mobilité (ou d'itinérance) du fait de la transmission des flux multimédia destinés aux différents récepteurs sur un réseau optique multiplexé en longueur d'ondes (WDM, pour « Wavelength Division Multiplexing » en anglais, ou CWDM, pour « coarse Wavelength Division Multiplexing » en anglais).

Les moyens de traitement du système conforme à l'invention comprennent des moyens d'émission d'un ensemble de longueurs d'onde, tels qu'un ensemble de sources laser modulées par le flux multimédia à transmettre et combinées par le biais d'un multiplexeur optique. La transmission optique entre les moyens de traitement et les bornes d'accès optique s'effectue sur plusieurs longueurs d'ondes, chaque longueur d'onde étant associée à un récepteur optique, et donc à un utilisateur mobile particulier.

En d'autres termes, dans le système de transmission optique de données multiplexées en longueur d'onde, du type WDM ou CWDM, chaque longueur d'onde du signal multiplexé est dédiée à un utilisateur.

L'ensemble des données au format WDM ou CWDM est transmis à toutes les bornes d'accès optique, si il y en a plusieurs. Il n'y a donc pas de borne d'accès optique dédié à un utilisateur donné, la sélection de l'utilisateur donné étant mise en œuvre par un filtre de longueur d'onde associé au casque immersif que porte l'utilisateur donné, ce qui simplifie l'assignation des données à un utilisateur donné.

Le dispositif de réception optique de chaque utilisateur comprend un filtre optique pour extraire une séquence de données émise sur une longueur d'onde.

Le filtre optique positionné entre l'optique de collection et le photorécepteur du dispositif de réception est configuré pour extraire le canal optique idoine parmi le multiplex WDM incident).

En d'autres termes, l'opération d'extraction consiste à coupler le signal multiplexé à l'entrée d'un filtre optique calé sur la longueur d'onde du canal à extraire.

Selon un aspect particulier de l'invention, les moyens de transmission optique comprennent des moyens d'émission de plusieurs faisceaux optiques de longueurs d'ondes distinctes, chaque longueur d'onde étant associée à un récepteur optique mobile particulier.

Selon un aspect particulier de l'invention, les moyens d'émission de plusieurs faisceaux optiques comprennent plusieurs sources de lumière cohérente non visible.

Selon un aspect particulier de l'invention, les moyens de multiplexage sont configurés pour multiplexer en longueur d'ondes plusieurs flux multimédia immersifs.

Selon un aspect particulier de l'invention, le multiplexage est du type WDM, CWDM ou DWDM.

Selon un aspect particulier de l'invention, la liaison optique entre les moyens de transmission optique et chaque dispositif de réception optique présente un débit supérieur à 10 Gbit/s.

Selon un aspect particulier de l'invention, la liaison optique entre les moyens de transmission optique et chaque dispositif de réception optique présente un débit supérieur à 15 Gbit/s.

Selon un aspect particulier de l'invention, la distance entre ladite borne d'accès optique et ledit dispositif de réception optique est comprise entre 1 et 5 m.

Selon un aspect particulier de l'invention, la borne d'accès optique comprend des moyens d'émission d'un faisceau collimaté formant une cellule optique.

Selon un aspect particulier de l'invention, la borne d'accès optique comprend des moyens d'émission d'un faisceau de divergence angulaire comprise entre +/- 10 et +/- 15° formant une cellule optique.

Selon un aspect particulier de l'invention, le système comprend plusieurs bornes d'accès optique fixes réparties dans un plan situé au-dessus dudit au moins un utilisateur et formant plusieurs cellules optiques adjacentes.

Selon un aspect particulier de l'invention, ladite au moins une borne d'accès optique est portée par un dispositif mobile apte à se déplacer dans un plan horizontal stationnaire dudit espace d'immersion.

Selon un aspect particulier de l'invention, le système comprend des moyens de contrôle de la position de la borne d'accès optique mobile dans le plan horizontal stationnaire en fonction de la position et/ou de l'orientation dudit dispositif de réception optique.

Selon un aspect particulier de l'invention, le système comprend un répartiteur optique relié aux moyens de transmission optique et configuré pour distribuer ledit signal optique multiplexé vers chacun des bornes d'accès optiques.

Selon un aspect particulier de l'invention, le dispositif de réception optique est porté par un casque immersif, par exemple de type HMD.

Selon un aspect particulier de l'invention, le dispositif de réception optique comprend plusieurs capteurs optiques répartis sur le casque.

Selon un aspect particulier de l'invention, le dispositif de réception optique comprend un capteur optique unique monté sur des moyens de support pivotant et des moyens de mesure de l'inclinaison du casque assurant le bon positionnement du capteur optique par rapport à la borne d'accès optique.

Selon un aspect particulier de l'invention, le dispositif de réception optique comprend un concentrateur optique non-imageant, couplé à un photodétecteur unique, dont l'angle de vue est adapté à la divergence du faisceau émis par la borne d'accès optique et la taille de la cellule optique.

Selon un aspect particulier de l'invention, le dispositif de réception optique comprend une optique imageante de type objectif convergent, couplée à une matrice de photodétecteurs.

L'invention concerne, par ailleurs, un procédé de transmission d'un flux multimédia immersif vers au moins un utilisateur dans un espace d'immersion dans lequel ledit utilisateur, portant un dispositif de réception optique, peut se déplacer, des moyens de traitement mettent en œuvre les étapes :
- de génération d'un premier flux multimédia immersif destiné audit premier utilisateur en fonction des mouvements de ce dernier,
- de transmission optique d'un signal optique multiplexé vers au moins une borne d'accès optique comprenant a) une étape d'association dudit premier flux multimédia immersif à une première longueur d'onde et b) une étape de multiplexage de plusieurs flux multimédia immersifs associés à des longueurs d'ondes distinctes, dont ledit premier flux multimédia immersif associé à la première longueur d'onde, de façon à former ledit signal optique multiplexé,
ledit dispositif de réception optique mettant en œuvre :
- une étape de réception du signal optique multiplexé via une liaison optique sans fil depuis une borne d'accès optique disposée dans ledit espace d'immersion de façon à former une cellule optique s'étendant dans ledit espace d'immersion, lorsque ledit utilisateur se situe dans la cellule optique, et
- une étape de filtrage pour extraire le premier flux multimédia immersif destiné au premier utilisateur à partir du signal optique multiplexé.

### 4. Liste des figures

D'autres caractéristiques et avantages de l'invention apparaîtront plus clairement à la lecture de la description suivante de plusieurs modes de réalisation particuliers, donnés à titre de simples exemples illustratifs et non limitatifs, et des dessins annexés, parmi lesquels :
- la figure 1 présente est une vue schématique de la structure d'un système pour créer un environnement de réalité virtuelle ou augmentée selon un premier mode de réalisation de l'invention ;
- la figure 2 est une vue, en perspective, de la structure de la figure 1 montrant schématiquement la grille de bornes d'accès optique et de cellules optiques ;
- la figure 3 présente un deuxième mode de réalisation du système de l'invention mettant en œuvre un drone (ou un pico-drone) géostationnaire servant de relais pour la transmission de données multimédia au récepteur disposé sur le casque d'un utilisateur ;
- la figure 4 illustre de façon schématique la transmission de plusieurs flux multimédia destinés à différents récepteurs sur un réseau optique multiplexé en longueur d'ondes.

### 5. Description de modes de réalisation de l'invention

Par flux multimédia, on entend dans tout ce qui suit un flux de données numériques multiples comprenant plusieurs composantes qui peuvent être de nature sonore (audio), visuelle (texte, image, vidéo, etc.), haptique, olfactive ou gustative.

### 5.1 Architecture globale du système

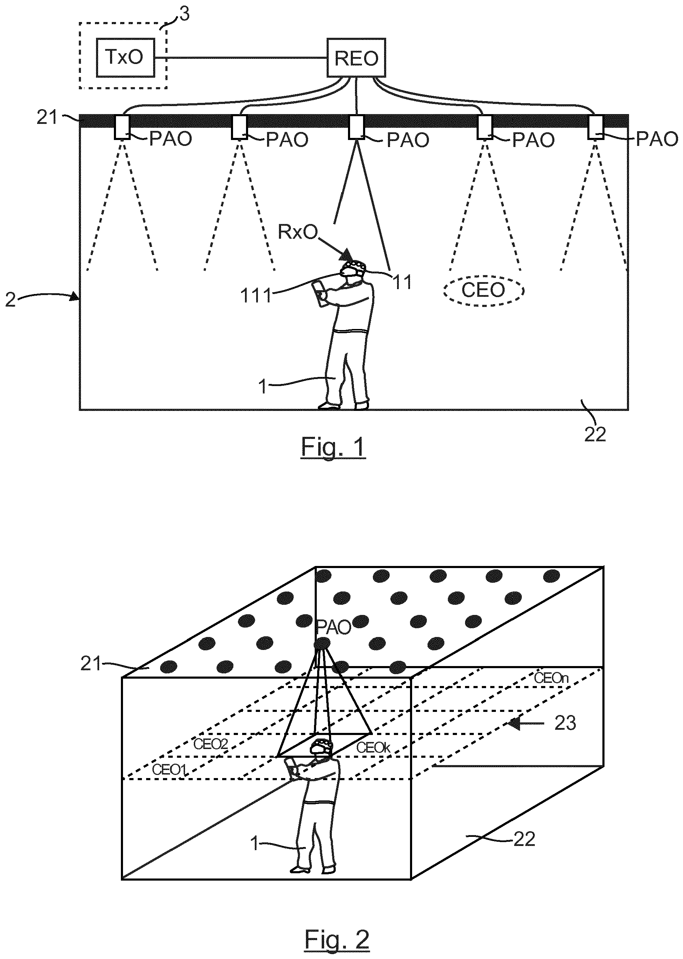

La figure 1 schématise l'architecture globale d'un système pour créer un environnement de réalité virtuelle ou augmentée vis-à-vis d'un ou de plusieurs utilisateurs mobiles, selon un premier mode de réalisation.

Dans cet exemple, on a représenté un unique utilisateur 1 qui évolue dans un espace d'immersion 2 de type CAVE. Toutefois, il est clair que l'invention ne se limite pas à cette seule application.

L'architecture du système de l'invention met en œuvre les dispositifs suivants :
- un émetteur optique, ou moyen de transmission optique, (TxO) fixe fournissant un signal optique comprenant au moins un flux multimédia immersif (notamment audio et vidéo) véhiculé par une porteuse optique cohérente dans la bande non visible, cette porteuse étant un faisceau laser dans cet exemple avec une longueur d'onde de 1550 nm ;
- un répartiteur optique (REO), relié à l'émetteur optique (TxO) au moyen d'une fibre optique ou d'une liaison optique sans-fil, configuré pour distribuer signal optique (et donc le ou les flux multimédia) vers chacun des points d'accès optiques (PAO) ;
- les Point d'Accès Optique (PAO), reliés au répartiteur optique (REO) au moyen d'une fibre optique ou d'une liaison optique sans-fil et répartis dans le plafond 21 de l'espace d'immersion 2, qui sont configurés pour former une cellule optique (CEO) vers la zone d'évolution du ou des utilisateurs mobiles ;
- plusieurs cellules optiques (CEO) coniques formées par chacun des Points d'Accès Optique (PAO) et un plan d'utilisation ou de réception 23 (illustré sur la figure 2) qui est situé au niveau de la tête des utilisateurs, soit à une hauteur comprise entre 1,5 et 2 m du sol 22 ;
- un récepteur optique (RxO), situé sur le terminal multimédia (un casque immersif 11 dans cet exemple) de l'utilisateur 1. Le rôle du récepteur optique (RxO) est de détecter dans le signal optique de la cellule optique (CEO) où se trouve l'utilisateur, le flux multimédia qui lui est destiné. Pour ce faire, le récepteur optique (RxO) filtre et démodule le signal optique de façon à extraire le flux multimédia qui lui est destiné et aiguille ce dernier vers les afficheurs d'immersion multimédia intégrés au casque immersif 11.

On note, par ailleurs, que des moyens de traitement 3 comprenant un microprocesseur associé à des circuits de mémorisation, peuvent être utilisés afin d'exécuter un programme informatique de génération d'un contenu en réalité virtuelle tridimensionnel (3D) transmis par l'émetteur optique (TxO).

L'émetteur optique comprend des moyens d'émission d'un faisceau optique de longueur d'onde prédéterminée et des moyens d'association d'un flux multimédia immersif à la longueur d'onde prédéterminée.

On note, par ailleurs, que le casque immersif 11 est un casque à trois dimensions, de type HMD par exemple, apte à afficher des images générées par ordinateur et à plonger l'utilisateur 1 dans un environnement virtuel.

Dans cet exemple, le casque immersif 11 de l'utilisateur 1 comprend une structure opaque 111 supportant des écrans d'affichage (ou afficheurs) situés au niveau des yeux de l'utilisateur 1, des écouteurs gauche et droite, et porte le récepteur optique (RxO), l'utilisateur 1 étant de facto protégé par le rayonnement issu du Point d'Accès Optique (PAO), dont la puissance d'émission peut largement dépasser les normes de sécurité oculaire de classe 1.

Le casque immersif 11 comprend par ailleurs des capteurs de position et d'orientation de la tête de l'utilisateur 1, et des moyens de transfert (transponder standard) du flux vidéo reçu par le récepteur optique (RxO) en ultra-haute-définition (4K/8K), ou au-delà, en termes de débit numérique transféré.

Par ailleurs, l'utilisateur porte des capteurs de mouvement, de type accéléromètre, des membres (mains et pieds notamment). Les capteurs de position et d'orientation de la tête de l'utilisateur 1 (et donc du casque 11) et les capteurs de mouvement des membres sont destinés à convertir les mouvements de l'utilisateur en une première information.

Cette première information peut être transmise vers les moyens de traitement 3 par un canal radiofréquence standardisé de type « Bluetooth » ou Wi-Fi ou bien par le biais d'un lien optique montant.

Les moyens de traitement 3 comprennent des moyens de contrôle de la diffusion d'un contenu tridimensionnel à l'utilisateur, qui est dans cet exemple un flux multimédia (vidéo et audio), vers les afficheurs et les écouteurs du casque 11, en fonction de la première information, c'est-à-dire en fonction des mouvements de l'utilisateur.

Dans une alternative, ou en complément, un ensemble de capteurs de mouvements (tels que des caméras) sont portées par la structure de l'espace d'immersion 2 et répartis sur celle-ci.

Le terminal multimédia portatif de l'utilisateur est ici un casque immersif. Il peut toutefois s'agir de tout appareil porté par un utilisateur et permettant de créer une immersion virtuelle tridimensionnelle (3D), tel un ordinateur portable ou une tablette tactile.

Dans l'exemple illustré sur la figure 1, l'utilisateur est équipé d'une manette de commande délivrant une deuxième information qui peut être transmise vers les moyens de traitement 3 par un canal radiofréquence standardisé de type « Bluetooth » ou Wi-Fi ou bien par le biais d'un lien optique montant.

On comprend donc que dans ce mode de mise en œuvre, les moyens de traitement 3 transmettent en continu et de façon dynamique un contenu tridimensionnel à l'utilisateur en fonction également de cette deuxième information.

Par sa transparence aux protocoles réseau de la couche liaison (e.g. ethernet), l'invention transporte des connexions bidirectionnelles entre l'émetteur (via les points d'accès optique PAO) et les récepteurs optiques (RxO) mobiles. On parle alors de liaison descendante dans le sens PAO-RXO, transportant le flux multimedia immersif, et de liaison montante dans le sens inverse.

Même si elle ne transporte pas des débits importants, le rôle de la liaison montante est capital, car elle permet au récepteur optique (RxO) de : (i) signaler à l'émetteur tout problème sur le canal (occultation, perte de puissance), et (ii) synchroniser les données générées par l'émetteur optique (TxO), en signalant l'état de la mémoire tampon de réception. Chaque extrémité de la liaison (émettrice et réceptrice) peut émettre et recevoir simultanément.

La figure 2 est une vue schématique, en perspective, du système de la figure 1, sur laquelle est représentée la décomposition du plan de réception 23 de l'utilisateur 1 mobile en cellules optiques (CEO) adjacentes, chacune des cellules optiques (CEO) étant alimentée par un signal optique émis par un Point d'Accès Optique (PAO).

Le plafond 21 de l'espace d'immersion 2 présente une grille de Points d'Accès Optique (PAO), dont le pas est déterminé par la couverture optique du ou des récepteurs optique (RxO). La grille de Points d'Accès Optique (PAO) est donc configurée de façon à former des cellules optiques (CEO) dans le plan de réception 23, et à éviter la présence de zones « mortes » entre les cellules optiques (CEO).

La forme des cellules optiques (CEO) est carrée dans l'exemple illustré, de dimensions égales à 50cm sur 50cm. Toutefois, d'autres formes de cellules optiques (CEO) peuvent être envisagées, comme par exemple une forme hexagonale ou conique.

La géométrie de ces cellules optiques (CEO) est choisie de façon à limiter les recouvrements dans le plan de réception 23, ce dernier étant situé entre 1,50 et 2,00 m du sol 22.

La puissance optique à l'intérieur d'une cellule optique (CEO) est calibrée de telle sorte qu'elle garantit un niveau minimum d'accrochage du détecteur (ou récepteur optique (RxO)), notamment sur le contour de la cellule optique (CEO).

Les caractéristiques du mode d'adressage sont comme suit :
- surface au sol : de 16 à 36 m² ;
- transmission à partir du plafond vers un ou plusieurs récepteurs optiques (RxO) se déplaçant dans un plan dit « de réception » ;
- seul le lien descendant (« *downlink* » en anglais) est décrit en détail. Le lien montant (« *uplink* » en anglais), requiert un débit limité (de l'ordre de quelques dizaines de kbit/s) qui peut être assuré par un canal radiofréquence standardisé de type « Bluetooth » ou Wi-Fi (dans tous les cas cependant les transferts de données sont bidirectionnels) ou par un lien optique (c'est cette solution qui est utilisée dans l'exemple illustré) ;
- pas de contrainte particulière sur la pollution par la lumière ambiante.

Le transfert intercellulaire ("*handover*" en anglais) est assuré naturellement au niveau du protocole utilisé pour les échanges de données tels qu'Ethernet, GigaEthernet, ATM, SDH, xDSL.

Ceci permet de supprimer, ou à tout le moins réduire, la sensibilité des liaisons optiques à la mobilité du ou des utilisateurs.

### 5.2 Mise en œuvre de la transmission de données multiplexées en longueur d'onde

La technique de multiplexage en longueur d'onde (WDM) consiste de manière connue à multiplexer plusieurs signaux de longueurs d'ondes différentes sur une seule et même liaison optique.

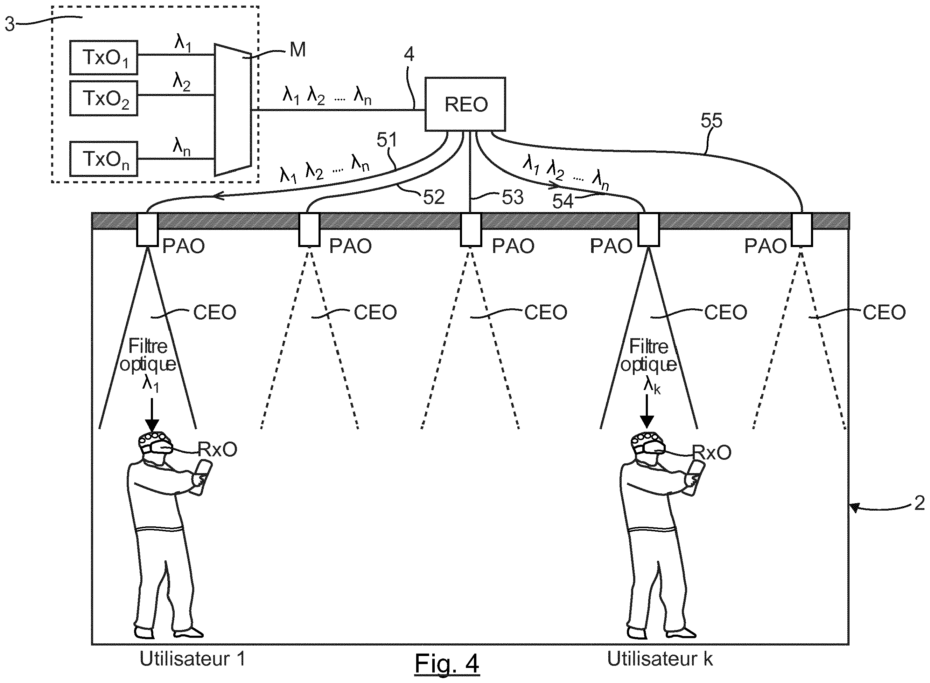

La figure 4 illustre de façon schématique la transmission des flux multimédia destinés à différents récepteurs optiques (RxO) sur un réseau optique multiplexé en longueur d'ondes (de type WDM).

Cette technique permet d'acheminer un certain nombre de flux multimédia simultanément, à savoir une vingtaine de flux en CWDM et près de 200 en DWDM, (pour « dense » WDM), cette dernière option étant plus coûteuse par l'emploi de filtres optiques très étroits et de sources laser stabilisées en température.

Dans un tel système, des émetteurs optiques, ou moyens de transmission optique, (TxO₁, TxO₂ ... TxOₙ) fournissent des flux de données multimédia à destination de différents utilisateurs (et notamment l'utilisateur 1 et l'utilisateur k) qui modulent des signaux optiques à différentes longueurs d'onde émis par des lasers. On comprend que le nombre de longueurs d'ondes est indexé sur le nombre d'utilisateurs.

Les signaux optiques λ₁, λ_{2 ...} et λₙ ainsi modulés sont multiplexés en longueur d'onde par un multiplexeur M sur une fibre optique 4, formant ainsi un signal optique λ₁ λ_{2...}λₙ multivoies vers le répartiteur optique (REO).

En d'autres termes, on combine des signaux optiques λ₁, λ_{2 ...} et λₙ constitués chacun d'une onde porteuse optique modulée en fonction de l'information à émettre, chaque onde porteuse possédant une longueur d'onde spécifique.

Les émetteurs optiques (TxO₁, TxO₂ ... TxOₙ) comprennent chacun des moyens d'émission d'un faisceau optique (laser) de longueur d'onde prédéterminée et des moyens d'association d'un flux multimédia immersif à la longueur d'onde prédéterminée.

Le répartiteur optique (REO) distribue le même signal optique λ₁ λ_{2 ...}λₙ vers chaque Point d'Accès Optique (PAO) par les biais des canaux de transmission optiques 51 à 55.

Chaque Point d'Accès Optique (PAO) distribue le même signal optique λ₁ λ_{2 ...}λₙ dans chaque cellule optique (CEO).

Dans le système de l'invention, l'identification de l'utilisateur est faite par longueur d'onde (les données sont envoyées à tout le monde, le casque fait la détection: ainsi, le casque immersif k perçoit le canal k et fait donc la détection).

Ainsi, à la réception, le récepteur optique (RxO) de l'utilisateur 1 met en œuvre un filtre optique de longueur d'onde λ₁ qui filtre le signal optique λ₁ λ_{2 ...}λₙ de façon à extraire le flux multimédia qui lui est destiné et aiguille ce dernier vers les afficheurs d'immersion multimédia intégrés au casque immersif.

De la même manière, le récepteur optique (RxO) de l'utilisateur k met en œuvre un filtre optique de longueur d'onde λₖ qui filtre le signal optique de façon à extraire le flux multimédia qui lui est destiné et aiguille ce dernier vers les afficheurs d'immersion multimédia intégrés au casque immersif. En d'autres termes, le filtre bloque les signaux optiques dont la longueur d'onde est différente d'une longueur d'onde de transmission sélectionnée parmi celles de ladite multiplicité.

Le système de type WDM de l'invention permet d'atteindre des débits de transmission élevés, Le débit des données est supérieur à 10 Gbit/s, et en particulier supérieur à 15 Gbit/s pour chaque utilisateur, les cellules optiques (CEO) assurant la transmission pendant le déplacement de chaque utilisateur dans l'espace d'immersion 2.

On note que les sources laser présentent des longueurs d'onde comprises autour de 1,55 µm, entre 1450 et 1650 nm. Cette plage de longueurs d'ondes est sélectionnée en fonction des normes de sécurité oculaire, moins strictes en dessous de 1400 nm en raison de la barrière cornéenne.

L'espacement des longueurs d'onde entre les signaux optiques adjacents est par exemple égal à 0,8 nm pour un système de type DWDM et de 10 à 20 nm pour un système CWDM.

En variante, le multiplexage en longueur d'ondes peut être du type CWDM (pour " coarse wavelength division multiplexing" en anglais) ou DWDM.

Le système de l'invention met en œuvre un schéma de connexion en mode « indirect », dans lequel la liaison entre l'émetteur optique (TxO) et le ou les récepteurs optiques (RxO) est relayée par un ou plusieurs points d'accès optiques (PAO) situés dans le plafond 21 de l'espace d'immersion 2.

Ainsi, les connexions entre le ou les points d'accès optiques (PAO) et le ou les récepteurs optiques (RxO) sont à la fois plongeantes et à longueur minimale (entre 1 et 5m), minimisant les blocages. Ceci permet d'amener les données au plus près des utilisateurs.

Les connexions sont adaptées aux cas de multiples usagers (deux ou plus).

La technique de l'invention permet ainsi d'adresser un ou plusieurs récepteurs optiques (RxO) mobile(s) et/ou fixe(s) sans risque d'interruption de la transmission optique.

Le technique de l'invention permet en outre de minimiser les pertes en puissance du lien optique sans-fil entre le ou les points d'accès optiques (PAO) et le ou les récepteurs optiques (RxO).

### 5.3 Autre mode de réalisation

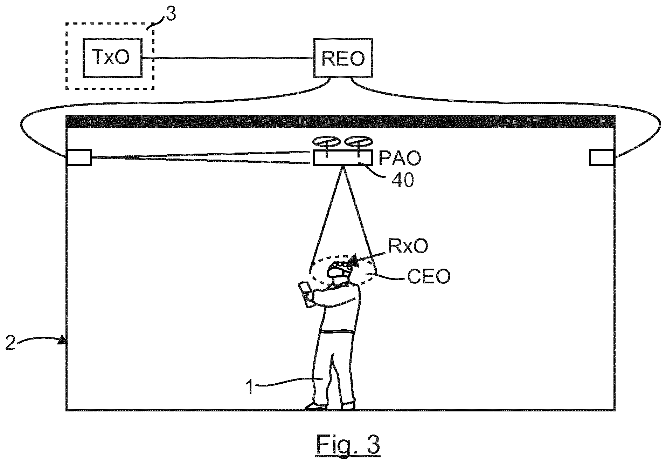

La figure 3 représente de façon schématique la structure simplifiée d'un système d'immersion d'un ou plusieurs utilisateurs dans une réalité virtuelle ou augmentée, selon un autre mode de réalisation.

Dans ce mode de réalisation, un Point d'Accès Optique (PAO) est monté sur une nacelle 40 mobile, tel qu'un drone ou un pico-drone par exemple.

La nacelle 40 est placée en vol géostationnaire au-dessus du récepteur optique (RxO) du casque immersif 11 de l'utilisateur 1. La nacelle 40 sert de relais pour la transmission du flux multimédia immersif destiné à l'utilisateur 1 vers le récepteur optique (RxO) disposé sur le casque immersif 1. La nacelle 40 peut éventuellement servir de relais à deux casques immersifs ou plus. Le relais est constitué d'une simple optique passive de renvoi (un miroir suivi d'un dispositif optique relais, par exemple), ou bien d'un répéteur régénérateur (sachant que dans ce cas, on perd la transparence optique en impactant l'autonomie du drone : poids accru et consommation accrue des circuits de détection/amplification).

La liaison entre l'émetteur optique (TxO) et le Point d'Accès Optique (PAO) placé sur la nacelle 40 est mis en œuvre par une liaison optique directe asservie, la nacelle 4 étant géolocalisée à cette fin. La liaison entre la source de données, c'est-à-dire l'émetteur optique (TxO), et la nacelle 40 est assurée par une liaison optique sans fil.

La position de la nacelle 40 est asservie à celle du casque immersif 11, et plus particulièrement à la position, l'orientation et l'inclinaison du récepteur optique (RxO) du casque 11, de manière à former une liaison optique en ligne de vue directe.

Une information relative à la position, l'orientation et l'inclinaison du récepteur optique (RxO) est transmise par le lien montant (« uplink » en anglais) vers les moyens de traitement 3 qui contrôlent la position de la nacelle 4 en fonction de l'information reçue.

La nacelle 40 est géolocalisée et asservie en position par le biais d'un ou plusieurs lasers fixes qui sont situés dans le plan géostationnaire de la nacelle 4.

Dans l'exemple illustré, le positionnement précis de la nacelle 4 est assuré au moyen d'un laser disposé sur une paroi de l'espace d'immersion 2. Le laser fixe permet le pointage ("tracking") de la nacelle 40. Une fois le "tracking" effectué, la transmission par voie optique est initiée (la nacelle 40 sert donc de relais optique une fois l'asservissement effectué).

Dans une mise en œuvre particulière, la ou les nacelles 40 évoluent dans un plan stationnaire à une hauteur comprise entre 3 et 4 m par rapport au sol 22.

De la même manière que dans le premier mode de réalisation, les moyens de traitement 3 corrèlent la diffusion de données multimédia, et notamment d'images vers l'écran d'affichage du casque immersif (et donc le défilement de l'environnement virtuel dans la perception de l'utilisateur) avec les mouvements de la main, du pied et de la tête de l'utilisateur 1 dans l'espace 2 réel.

Les connexions entre le ou les points d'accès optiques (PAO) et le ou les récepteurs optiques (RxO) sont à la fois plongeantes et à longueur minimale (entre 1 et 5 mètres).

La technique de l'invention permet ainsi d'adresser simultanément un ou plusieurs récepteurs optiques (RxO) mobile(s) et/ou fixe(s) sans risque d'interruption de la transmission optique.

La technique de l'invention permet en outre de minimiser les pertes en puissance du lien optique sans-fil entre le ou les points d'accès optiques (PAO) et le ou les récepteurs optiques (RxO), et permet des transferts de données multimédia à très haut débit.

Le débit des données est supérieur à 10 Gbit/s, et en particulier supérieur à 15 Gbit/s.

On note que l'information relative à la position, l'orientation et l'inclinaison du récepteur optique (RxO) est issue de plusieurs capteurs répartis sur le casque ou bien d'un capteur unique qui est monté sur des moyens de support pivotant, tels une rotule (de façon à rester orienté vers le haut/plafond de l'espace immersif) et qui est associé à un inclinomètre ou un gyroscope.

Le récepteur optique (RxO) peut ainsi porter plusieurs détecteurs positionnés de façon à autoriser/permettre une inclinaison du casque de part et d'autre de la ligne joignant le point d'accès optique (PAO) au casque de l'ordre de plus ou moins 30° (angle zénithal).

Le récepteur optique (RxO) est constitué, par exemple, de matrices de micro-lentilles couplées à des filtres optiques suivis de matrices de photodiodes amplifiées constituant des détecteurs rapides.

### 5.4 Autres aspects

Le système de l'invention vise en particulier un usage domestique. Dans ce cas, le nombre d'utilisateurs est réduit. Ainsi, il peut être utilisé par un ou deux utilisateurs situés dans une pièce d'une habitation, par exemple.

Le système de l'invention vise également un usage dans un espace plus large du type « CAVE » accueillant plusieurs récepteurs mobiles, de deux à dix par exemple.

Le système de l'invention intègre les contraintes économiques du mode d'application choisi : pour un usage de type domestique, le coût d'infrastructure doit être réduit ce qui impose un dispositif plus léger impliquant notamment un suivi spatial et angulaire individuel.

Pour un usage professionnel ou commercial de type CAVE, le coût d'infrastructure peut être plus important.

Par ailleurs, l'invention ne se limite pas au seul cas où le récepteur destinataire est un casque. Il peut s'agir de tout autre dispositif mobile ou fixe (smartphone, tablette tactile, par exemple)
La deuxième liaison optique entre un point d'accès optique (PAO) et un récepteur optique (RxO) peut être collimatée ou présenter une diffraction contrôlée sur au moins 1 m, de telle sorte à contrôler le niveau et l'uniformité de la puissance du faisceau sur le récepteur optique (RxO). La divergence du faisceau en sortie du point d'accès optique (PAO) est, par exemple, comprise entre + ou - 10° et + ou - 15°.

L'optique de réception au niveau du casque peut intégrer deux types de solution, visant à maximiser la puissance du signal optique collecté :
- un concentrateur optique non-imageant, couplé à un photodétecteur unique, dont l'angle de vue est adapté à la divergence du faisceau émis par le point d'accès optique (PAO) et la taille de la cellule optique (CEO),
- une optique imageante de type objectif convergent, couplée à une matrice de photodétecteurs assurant un angle de vue suffisant.

L'invention est ainsi mise en œuvre au niveau de la couche physique qui sert à établir les connexions physiques. Cette couche est compatible avec les différents protocoles utilisés pour les échanges de données tels qu'Ethernet, GigaEthernet, ATM, SDH, xDSL (permettant notamment le transfert intercellulaire ("*handover*" en anglais) entre différentes cellules de la Figure 2). La solution de l'invention est transparente au protocole d'échange utilisé.

## Revendications

1. Système d'immersion d'au moins un premier utilisateur (1) dans une réalité virtuelle ou augmentée comprenant un espace d'immersion (2) dans lequel peut se déplacer ledit au moins un premier utilisateur (1), ledit système comprenant:
- un dispositif de réception optique (11) portable par ledit premier utilisateur,
- au moins une borne d'accès optique
- des moyens de traitement (3) comprenant :
- des moyens de génération d'un premier flux multimédia immersif destiné audit premier utilisateur (11) en fonction des mouvements de ce dernier,
- des moyens de transmission optique (TxO₁, TxO₂ ... TxOₙ) d'un signal optique multiplexé (λ₁, λ_{2 ...}λₙ) vers au moins une des bornes d'accès optique (PAO) comprenant a) des moyens d'association dudit premier flux multimédia immersif à une première longueur d'onde et b) des moyens de multiplexage (M) configurés pour multiplexer plusieurs flux multimédia immersifs associés à des longueurs d'ondes distinctes, dont ledit premier flux multimédia immersif associé à la première longueur d'onde, de façon à former ledit signal optique multiplexé (λ₁, λ_{2 ...}λₙ), ladite au moins une borne d'accès optique (PAO) étant disposée dans ledit espace d'immersion (2) de façon à former une cellule optique (CEO) s'étendant dans ledit espace d'immersion (2), ledit dispositif de réception optique (11) comprenant a) des moyens de réception du signal optique multiplexé (λ₁, λ_{2 ...}λₙ) depuis ladite au moins une borne d'accès optique (PAO) via une liaison optique sans fil lorsque ledit premier utilisateur (1) se situe dans la cellule optique (CEO), et b) des moyens de filtrage configurés pour extraire le premier flux multimédia immersif destiné au premier utilisateur (1) à partir du signal optique multiplexé (λ₁, λ_{2 ...}λₙ).

2. Système d'immersion selon la revendication 1, **caractérisé en ce que** les moyens de transmission optique (TxO₁, TxO₂ ... TxOₙ) comprennent des moyens d'émission de plusieurs faisceaux optiques de longueurs d'ondes distinctes, chaque longueur d'onde étant associée à un récepteur optique (RxO) mobile particulier.

3. Système d'immersion selon la revendication 2, **caractérisé en ce que** les moyens d'émission de plusieurs faisceaux optiques comprennent plusieurs sources de lumière cohérente non visible.

4. Système d'immersion selon l'une des revendications 1 à 3, **caractérisé en ce que** les moyens de multiplexage (M) sont configurés pour multiplexer en longueur d'ondes plusieurs flux multimédia immersifs.

5. Système d'immersion selon la revendication 4, **caractérisé en ce que** le multiplexage est du type WDM, CWDM ou DWDM.

6. Système d'immersion selon la revendication 4 ou 5, **caractérisé en ce que** la liaison optique entre les moyens de transmission optique (TxO₁, TxO₂ ... TxOₙ) et chaque dispositif de réception optique présente un débit supérieur à 10 Gbit/s.

7. Système d'immersion selon la revendication 6, **caractérisé en ce que** la liaison optique entre les moyens de transmission optique (TxO₁, TxO₂ ... TxOₙ) et chaque dispositif de réception optique (11) présente un débit supérieur à 15 Gbit/s.

8. Système d'immersion selon l'une des revendications 1 à 7, **caractérisé en ce que** la distance entre ladite borne d'accès optique (PAO) et ledit dispositif de réception optique (11) est comprise entre 1 et 5 m.

9. Système d'immersion selon l'une des revendications 1 à 8, **caractérisé en ce que** la borne d'accès optique (PAO) comprend des moyens d'émission d'un faisceau collimaté formant une cellule optique (CEO).

10. Système d'immersion selon l'une des revendications 1 à 8, **caractérisé en ce que** la borne d'accès optique (PAO) comprend des moyens d'émission d'un faisceau de divergence angulaire comprise entre +/-10 et +/- 15° formant une cellule optique.

11. Système d'immersion selon l'une des revendications 1 à 10, **caractérisé en ce qu'**il comprend plusieurs bornes d'accès optique (PAO) fixes réparties dans un plan situé au-dessus dudit au moins un utilisateur (1) et formant plusieurs cellules optiques (CEO) adjacentes.

12. Système d'immersion selon l'une des revendications 1 à 11, **caractérisé en ce que** ladite au moins une borne d'accès optique (PAO) est portée par un dispositif mobile (40) apte à se déplacer dans un plan horizontal stationnaire dudit espace d'immersion (2).

13. Système d'immersion selon la revendication 12, **caractérisé en ce qu'**il comprend des moyens de contrôle de la position de la borne d'accès optique (PAO) mobile dans le plan horizontal stationnaire en fonction de la position et/ou de l'orientation dudit dispositif de réception optique (11).

14. Système d'immersion selon l'une des revendications 1 à 13, **caractérisé en ce qu'**il comprend un répartiteur optique (REO) relié aux moyens de transmission optique (TxO₁, TxO₂ ... TxOₙ) et configuré pour distribuer ledit signal optique multiplexé (λ₁, λ_{2 ...}λₙ) vers chacun des bornes d'accès optiques.

15. Système d'immersion selon l'une des revendications 1 à 14, **caractérisé en ce que** le dispositif de réception optique (11) est porté par un casque immersif, par exemple de type HMD.

16. Système d'immersion selon la revendication 15, **caractérisé en ce que** le dispositif de réception optique (11) comprend plusieurs capteurs optiques répartis sur le casque.

17. Système d'immersion selon la revendication 15, **caractérisé en ce que** le dispositif de réception optique (11) comprend un capteur optique unique monté sur des moyens de support pivotant et des moyens de mesure de l'inclinaison du casque.

18. Système d'immersion selon l'une des revendications 1 à 17, **caractérisé en ce que** le dispositif de réception optique (11) comprend un concentrateur optique non-imageant, couplé à un photodétecteur unique, dont l'angle de vue est adapté à la divergence du faisceau émis par la borne d'accès optique (PAO) et la taille de la cellule optique (CEO).

19. Système d'immersion selon l'une des revendications 1 à 17, **caractérisé en ce que** le dispositif de réception optique (11) comprend une optique imageante de type objectif convergent, couplée à une matrice de photodétecteurs.

20. Procédé de transmission d'un flux multimédia immersif vers au moins un utilisateur (1) dans un espace d'immersion (2) dans lequel ledit utilisateur, portant un dispositif de réception optique (11), peut se déplacer et dans laquelle des moyens de traitement mettent en œuvre les étapes :
- de génération d'un premier flux multimédia immersif destiné audit premier utilisateur en fonction des mouvements de ce dernier,
- de transmission optique d'un signal optique multiplexé (λ₁, λ_{2 ...}λₙ) vers au moins une borne d'accès optique comprenant a) une étape d'association dudit premier flux multimédia immersif à une première longueur d'onde et b) une étape de multiplexage de plusieurs flux multimédia immersifs associés à des longueurs d'ondes distinctes, dont ledit premier flux multimédia immersif associé à la première longueur d'onde, de façon à former ledit signal optique multiplexé (λ₁, λ_{2 ...}λₙ),
et en ce que ledit dispositif de réception optique met en œuvre :
- une étape de réception du signal optique multiplexé via une liaison optique sans fil depuis une borne d'accès optique (PAO) disposée dans ledit espace d'immersion (2) de façon à former une cellule optique (CEO) s'étendant dans ledit espace d'immersion, lorsque ledit utilisateur (1) se situe dans la cellule optique (CEO), et
- une étape de filtrage pour extraire le premier flux multimédia immersif destiné au premier utilisateur (1) à partir du signal optique multiplexé.

## Patentansprüche

1. System zur Immersion mindestens eines ersten Benutzers (1) in eine virtuelle oder erweiterte Realität, das einen Immersionsraum (2) umfasst, in dem sich der mindestens eine erste Benutzer (1) fortbewegen kann, wobei das System umfasst:
- eine optische Empfangsvorrichtung (11), die vom ersten Benutzer getragen werden kann,
- mindestens einen optischen Zugangspunkt,
- Verarbeitungsmittel (3), umfassend:
- Mittel zum Erzeugen eines ersten immersiven Multimediastroms, der für den ersten Benutzer (1) bestimmt ist, in Abhängigkeit von den Bewegungen dieses letzteren,
- Mittel zur optischen Übertragung (T_{X}O₁, TxO₂ ... TxOₙ) eines gemultiplexten optischen Signals (λ₁, λ₂ ... λₙ) an mindestens einen der optischen Zugangspunkte (PAO), umfassend a) Mittel zum Zuordnen des ersten immersives Multimediastroms zu einer ersten Wellenlänge, und b) Multiplexmittel (M), die dafür konfiguriert sind, mehrere immersive Multimediaströme, die verschiedenen Wellenlängen zugeordnet sind, darunter der erste immersive Multimediastrom, der der ersten Wellenlänge zugeordnet ist, so zu multiplexen, dass das gemultiplexte optische Signal (λ₁, λ₂ ... λₙ) gebildet wird,
wobei der mindestens eine optische Zugangspunkt (PAO) so im Immersionsraum (2) angeordnet ist, dass eine optische Zelle (CEO) gebildet wird, die sich im Immersionsraum (2) erstreckt, wobei die optische Empfangsvorrichtung (11) a) Mittel zum Empfangen des gemultiplexten optischen Signals (λ₁, λ₂ ... λₙ) von dem mindestens einen optischen Zugangspunkt (PAO) über eine drahtlose optische Verbindung, wenn sich der erste Benutzer (1) in der optischen Zelle (CEO) befindet, und b) Filtermittel umfasst, die dafür konfiguriert sind, den ersten immersiven Multimediastrom, der für den ersten Benutzer (1) bestimmt ist, aus dem gemultiplexten optischen Signal (λ₁, λ₂ ... λₙ) zu extrahieren.

2. Immersionssystem nach Anspruch 1, **dadurch gekennzeichnet, dass** die optischen Übertragungsmittel (TxO₁, TxO₂ ... TxOₙ) Mittel zum Senden von mehreren optischen Strahlen verschiedener Wellenlängen umfassen, wobei jede Wellenlänge einem bestimmten mobilen optischen Empfänger (RxO) zugeordnet ist.

3. Immersionssystem nach Anspruch 2, **dadurch gekennzeichnet, dass** die Mittel zum Senden von mehreren optischen Strahlen mehrere Quellen von nicht sichtbarem kohärentem Licht umfassen.

4. Immersionssystem nach einem der Ansprüche 1 bis 3, **dadurch gekennzeichnet, dass** die Multiplexmittel (M) dafür konfiguriert sind, mehrere immersive Multimediaströme in Wellenlängen zu multiplexen.

5. Immersionssystem nach Anspruch 4, **dadurch gekennzeichnet, dass** das Multiplexen vom Typ WDM, CWDM oder DWDM ist.

6. Immersionssystem nach Anspruch 4 oder 5, **dadurch gekennzeichnet, dass** die optische Verbindung zwischen den optischen Übertragungsmitteln (TxO₁, TxO₂ ... TxOₙ) und jeder optischen Empfangsvorrichtung eine Bitrate von mehr als 10 Gbit/s aufweist.

7. Immersionssystem nach Anspruch 6, **dadurch gekennzeichnet, dass** die optische Verbindung zwischen den optischen Übertragungsmitteln (TxO₁, TxO₂ ... TxOₙ) und jeder optischen Empfangsvorrichtung (11) eine Bitrate von mehr als 15 Gbit/s aufweist.

8. Immersionssystem nach einem der Ansprüche 1 bis 7, **dadurch gekennzeichnet, dass** die Entfernung zwischen dem optischen Zugangspunkt (PAO) und der optischen Empfangsvorrichtung (11) zwischen 1 und 5 m liegt.

9. Immersionssystem nach einem der Ansprüche 1 bis 8, **dadurch gekennzeichnet, dass** der optische Zugangspunkt (PAO) Mittel zum Senden eines kollimierten Strahls umfasst, die eine optische Zelle (CEO) bilden.

10. Immersionssystem nach einem der Ansprüche 1 bis 8, **dadurch gekennzeichnet, dass** der optische Zugangspunkt (PAO) Mittel zum Senden eines Strahls mit einer Winkeldivergenz im Bereich zwischen +/-10 und +/- 15° umfasst, die eine optische Zelle bilden.

11. Immersionssystem nach einem der Ansprüche 1 bis 10, **dadurch gekennzeichnet, dass** es mehrere feste optische Zugangspunkte (PAO) umfasst, die in einer Ebene verteilt sind, die sich über dem mindestens einen Benutzer (1) befindet, und die mehrere aneinandergrenzende optische Zellen (CEO) bilden.

12. Immersionssystem nach einem der Ansprüche 1 bis 11, **dadurch gekennzeichnet, dass** der mindestens eine optische Zugangspunkt (PAO) von einer mobilen Vorrichtung (40) getragen wird, die in der Lage ist, sich in einer stationären horizontalen Ebene des Immersionsraums (2) fortzubewegen.

13. Immersionssystem nach Anspruch 12, **dadurch gekennzeichnet, dass** es Mittel zum Steuern der Position des mobilen optischen Zugangspunkts (PAO) in der stationären horizontalen Ebene in Abhängigkeit von der Position und/oder der Ausrichtung der optischen Empfangsvorrichtung (11) umfasst.

14. Immersionssystem nach einem der Ansprüche 1 bis 13, **dadurch gekennzeichnet, dass** es einen optischen Strahlverteiler (REO) umfasst, der mit den optischen Übertragungsmitteln (TxO₁, TxO₂ ... TxOₙ) verbunden und dafür konfiguriert ist, das gemultiplexte optische Signal (λ₁, λ₂ ... λₙ) an jeden der optischen Zugangspunkte zu verteilen.

15. Immersionssystem nach einem der Ansprüche 1 bis 14, **dadurch gekennzeichnet, dass** die optische Empfangsvorrichtung (11) von einem Immersions-Headset, zum Beispiel vom Typ HMD, getragen wird.

16. Immersionssystem nach Anspruch 15, **dadurch gekennzeichnet, dass** die optische Empfangsvorrichtung (11) mehrere optische Sensoren umfasst, die auf dem Headset verteilt sind.

17. Immersionssystem nach Anspruch 15, **dadurch gekennzeichnet, dass** die optische Empfangsvorrichtung (11) einen einzelnen optischen Sensor, der an schwenkbaren Haltemitteln angebracht ist, und Mittel zum Messen der Neigung des Headsets umfasst.

18. Immersionssystem nach einem der Ansprüche 1 bis 17, **dadurch gekennzeichnet, dass** die optische Empfangsvorrichtung (11) einen nicht abbildenden optischen Konzentrator umfasst, der mit einem einzelnen Fotodetektor gekoppelt ist, dessen Sichtwinkel für die Divergenz des Strahls, der vom optischen Zugangspunkt (PAO) gesendet wird, und die Größe der optischen Zelle (CEO) geeignet ist.

19. Immersionssystem nach einem der Ansprüche 1 bis 17, **dadurch gekennzeichnet, dass** die optische Empfangsvorrichtung (11) eine Abbildungsoptik vom Typ Konvergenzobjektiv umfasst, die mit einer Matrix von Fotodetektoren gekoppelt ist.

20. Verfahren zum Übertragen eines immersiven Multimediastroms an mindestens einen Benutzer (1) in einem Immersionsraum (2), wobei der Benutzer, der eine optische Empfangsvorrichtung (11) trägt, sich fortbewegen kann, und wobei Verarbeitungsmittel die Schritte implementieren:
- des Erzeugens eines ersten immersiven Multimediastroms, der für den ersten Benutzer bestimmt ist, in Abhängigkeit von den Bewegungen dieses letzteren,
- der optischen Übertragung eines gemultiplexten optischen Signals (λ₁, λ₂ ... λₙ) an mindestens einen optischen Zugangspunkt, umfassend a) einen Schritt des Zuordnens des ersten immersives Multimediastroms zu einer ersten Wellenlänge, und b) einen Schritt des Multiplexens mehrerer immersiver Multimediaströme, die verschiedenen Wellenlängen zugeordnet sind, darunter der erste immersive Multimediastrom, der der ersten Wellenlänge zugeordnet ist, so, dass das gemultiplexte optische Signal (λ₁, λ₂ ... λₙ) gebildet wird,
und dadurch, dass die optische Empfangsvorrichtung implementiert:
- einen Schritt des Empfangens des gemultiplexten optischen Signals über eine drahtlose optische Verbindung von einem optischen Zugangspunkt (PAO), der so im Immersionsraum (2) angeordnet ist, dass eine optische Zelle (CEO) gebildet wird, die sich im Immersionsraum erstreckt, wenn sich der Benutzer (1) in der optischen Zelle (CEO) befindet, und
- einen Schritt des Filterns, um den ersten immersiven Multimediastrom, der für den ersten Benutzer (1) bestimmt ist, aus dem gemultiplexten optischen Signal zu extrahieren.

## Claims

1. System for immersing at least one first user (1) in a virtual or augmented reality comprising an immersion space (2), wherein said at least one first user (1) can move, said system comprising:
- an optical receiving device (11) which can be carried by said first user,
- at least one optical access point,
- processing means (3) comprising:
- means for generating a first immersive multimedia stream intended for said first user (1) according to the movements of the latter,
- means for optically transmitting (T_{X}O₁, TxO₂ ... TxOₙ) a multiplexed optical signal (λ₁, λ₂ ... λₙ) to at least one of the optical access points (PAO) comprising a) means for associating said first immersive multimedia stream with a first wavelength and b) multiplexing means (M) configured to multiplex several immersive multimedia streams associated with separate wavelengths of which said first immersive multimedia stream associated with the first wavelength, so as to form said multiplexed optical signal (λ₁, λ₂ ... λₙ), said at least one optical access point (PAO) being arranged in said immersion space (2) so as to form an optical cell (CEO) extending in said immersion space (2),
said optical receiving device (11) comprising a) means for receiving the multiplexed optical signal (λ₁, λ₂ ... λₙ) from said at least one optical access point (PAO) via a wireless optical connection when said first user (1) is situated in the optical cell (CEO), and b) filtering means configured to extract the first immersive multimedia stream intended for the first user (1) from the multiplexed optical signal (λ₁, λ₂ ... λₙ).

2. Immersion system according to claim 1, **characterised in that** the optical transmission means (TxO₁, TxO₂ ... TxOₙ) comprise means for emitting several optical beams of separate wavelengths, each wavelength being associated with a specific mobile optical receiver (RxO).

3. Immersion system according to claim 2, **characterised in that** the means for emitting several optical beams comprise several non-visible coherent light sources.

4. Immersion system according to one of claims 1 to 3, **characterised in that** the multiplexing means (M) are configured to multiplex in wavelengths, several immersive multimedia streams.

5. Immersion system according to claim 4, **characterised in that** the multiplexing is of the WDM, CWDM or DWDM type.

6. Immersion system according to claim 4 or 5, **characterised in that** the optical connection between the optical transmission means (TxO₁, TxO₂ ... TxOₙ) and each optical receiving device has a rate greater than 10 Gbit/s.

7. Immersion system according to claim 6, **characterised in that** the optical connection between the optical transmission means (TxO₁, TxO₂ ... TxOₙ) and each optical receiving device (11) has a rate greater than 15 Gbit/s.

8. Immersion system according to one of claims 1 to 7, **characterised in that** the distance between said optical access point (PAO) and said optical receiving device (11) is between 1 and 5 m.

9. Immersion system according to one of claims 1 to 8, **characterised in that** the optical access point (PAO) comprises means for emitting a collimated beam forming an optical cell (CEO).

10. Immersion system according to one of claims 1 to 8, **characterised in that** the optical access point (PAO) comprises means for emitting an angular divergence beam of between +/- 10 and +/- 15° forming an optical cell.

11. Immersion system according to one of claims 1 to 10, **characterised in that** it comprises several fixed optical access points (PAO) distributed in a plane situated above said at least one user (1) and forming several adjacent optical cells (CEO).

12. Immersion system according to one of claims 1 to 11, **characterised in that** said at least one optical access point (PAO) is carried by a mobile device (40) capable of moving in a stationary horizontal plane of said immersion space (2).

13. Immersion system according to claim 12, **characterised in that** it comprises means for controlling the position of the movable optical access point (PAO) in the stationary horizontal plane according to the position and/or the orientation of said optical receiving device (11).

14. Immersion system according to one of claims 1 to 13, **characterised in that** it comprises an optical distributor (REO) connected to the optical transmission means (TxO₁, TxO₂ ... TxOₙ) and configured to distribute said multiplexed optical signal (λ₁, λ₂ ... λₙ) to each of the optical access points.

15. Immersion system according to one of claims 1 to 14, **characterised in that** the optical receiving device (11) is carried by an immersive headset, for example of HMD type.

16. Immersion system according to claim 15, **characterised in that** the optical receiving device (11) comprises several optical sensors distributed over the headset.

17. Immersion system according to claim 15, **characterised in that** the optical receiving device (11) comprises a single optical sensor mounted on the pivoting support means and the means for measuring the inclination of the headset.

18. Immersion system according to one of claims 1 to 17, **characterised in that** the optical receiving device (11) comprises a non-imaging optical concentrator, coupled with one single photodetector, of which the viewing angle is adapted to the divergence of the beam emitted by the optical access point (PAO) and the size of the optical cell (CEO).

19. Immersion system according to one of claims 1 to 17, **characterised in that** the optical receiving device (11) comprises an imaging optic of convergent lens type, coupled with a photodetector matrix.

20. Method for transmitting an immersive multimedia stream to at least one user (1) in an immersion space (2), wherein said user, carrying an optical receiving device (11), can move, and wherein the processing means implement steps:
- of generating a first immersive multimedia stream intended for said first user according to the movements of the latter,
- of optically transmitting a multiplexed optical signal (λ₁, λ₂ ... λₙ) to at least one optical access point comprising a) a step of associating said first immersive multimedia stream with a first wavelength and b) a step of multiplexing several immersive multimedia streams associated with separate wavelengths, of which said first immersive multimedia stream associated with the first wavelength, so as to form said multiplexed optical signal (λ₁, λ₂ ... λₙ),
and in that said optical receiving device implements:
- a step of receiving the multiplexed optical signal via a wireless optical connection from an optical access point (PAO) arranged in said immersion space (2) so as to form an optical cell (CEO) extending into said immersion space, when said user (1) is situated in the optical cell (CEO), and
- a filtering step to extract the first immersive multimedia stream intended for the first user (1) from the multiplexed optical signal.
